# EUROPEAN PATENT APPLICATION

(11) **EP 4 545 482 A1**
(43) Date of publication of application: **30.04.2025**
(21) Application number: 23205678.8
(22) Date of filing: 25.10.2023
(51) Int. Cl.: C01G 53/00, H01M 4/505, H01M 4/525

(54) **BORON MODIFIED SPINEL LNMO CATHODE MATERIAL**

(71) Applicant: Zentrum für Sonnenenergie- und Wasserstoff-Forschung Baden-Württemberg Gemeinnützige Stiftung, 70563 Stuttgart (DE)
(72) Inventor: NISAR, Umair, 89073 Ulm (DE); AXMANN, Peter, 89155 Erbach (DE)
(74) Representative: Ter Meer Steinmeister & Partner

(57) **Abstract**

The invention provides an LNMO particulate material that comprises crystallites, crystals and secondary particles, wherein the secondary particles are composed of a multitude of crystals, and the crystals are composed of a multitude of crystallites, wherein a D₅₀ particle size of the secondary particles is between 3.0 µm and 25 µm, as measured by laser diffraction according to ISO 13320:2020, and wherein a D₅₀ particle size of the crystals is between 0.3 µm and 7.0 µm as measured by scanning electron microscope (SEM), and wherein, the LNMO particulate material is boron modified. In other aspects, the invention further provides a process for the production of boron modified Lithium-Nickel-Manganese-Oxide (LNMO) particulate material and a boron modified LNMO material obtainable by the process according to the present invention.

## Description

The present invention relates to engineering the morphology and enhancing the performance of high-voltage spinel lithium nickel manganese oxide (LNMO) cathode active material in secondary lithium-ion batteries by boron modification. Thus, it relates to a boron modified LNMO material, such as a high-voltage spinel LNMO cathode material. The present invention further provides methods of manufacture of a boron modified LNMO material.

### Description of the background art

The growing market for rechargeable Li-ion batteries (LIBs) for electric vehicles, renewable energy sources and consumer electronics demands the development of advanced batteries that are safe, cost-effective and have a high energy and power density. In this regard, due to their higher energy and power density capabilities, lithium-ion batteries have control over the market for portable electronic applications. Currently, the drive is towards the electrification of transportation and development of large energy storage systems (ESS) for various applications. Unfortunately, the current lithium-ion batteries still suffer from poor safety, low energy and low power density, which have seriously affected their widespread acceptance in electric vehicles.

Currently, several materials, including LiCoO₂, LiNiO₂, LiMn₂O₄, LiNi_{0.8}Co_{0.15}Al_{0.05}O₂, and LiNi_{0.8}Mn_{0.1}Co_{0.1}O₂, have been developed and used as cathode materials for lithium-ion batteries. However, these intercalation materials show severe capacity fading and have several safety concerns.

Several reasons have been proposed for this capacity fading, and safety concerns include degradation of the electrolyte at higher cutoff voltages (>4.5 V), structural instability and metal ion dissolution in the electrolyte due to HF generation. Among the developed materials for lithium-ion batteries, the high voltage spinel LiNi_{0.5}Mn_{1.5}O₄ (LNMO) is a promising cathode material owing to its high energy and power density, which results from the high theoretical capacity (~147 mAh g-1) and operating voltage (~4.7 V vs. Li⁺/Li). However, it still suffers from poor cycling performance due to the decomposition of electrolytes at a high operating voltage and temperature (>45 °C) which results due to parasitic reactions on the surface of the materials and results in a rapid fade in the capacity. To mitigate the issues related to LNMO, several approaches have been adopted by researchers, including morphology and particle size tailoring, structural disorder and lithium concentration tuning, Mn/Ni cation doping and surface modification. Surface modification has been widely accepted as a potential way to improve the performance of LNMO cathode materials.

Several material classes have been reported as coating materials, including oxides (ZrO₂, SiO₂, MgO, TiO₂, SiO₂, Al₂O₃), ionic conductors (Li₇La₃Zr₂O₁₂, Li₃xLa_{2/3- x}TiO₃, Li_{1.3}Al_{0.3}Ti_{1.7}(PO₄)₃), conductive polymers and conductive carbon. All these coatings reduce the unwanted side reaction between the electrolyte and the cathode material and hence improve the performance of these materials. Among these classes of coating materials, oxide coatings are straightforward and inexpensive and have shown promising results in improving the performance of cathode materials operating under different conditions. These oxide coatings prevent unwanted side reactions between cathode material surface and the electrolyte, which results in improved structural stability and capacity retention. Recently published reports of ZrO₂ coated on LNMO and lithium-rich oxide materials show extremely high rate performance, though the reason for such high performance is not clearly understood. Unfortunately, most of these surface modification approaches are not commercially viable for mass production, and it is difficult to control the thickness and uniformity of these coatings. Most of these coatings can also enhance the interfacial resistance, which can hinder Li-ion mobility during intercalation and deintercalation.

Thus, there is a need in the art for high-voltage cathode materials with high theoretical capacity and operating voltage, which shows improved cycling performance and capacity retention.

### Summary of the invention

These problems in the prior art have been solved in the present invention by the provision of a boron modified Lithium-Nickel-Manganese-Oxide (LNMO) material with specific particle morphology, as described herein.

Thus, in a **first aspect** there is provided an LNMO particulate material that comprises secondary particles, wherein the secondary particles are composed of a multitude of crystals, and said crystals are composed of a multitude of crystallites, wherein a D₅₀ particle size of the secondary particles is between 3.0 µm and 25 µm, as measured by laser diffraction according to ISO 13320:2020, and wherein a D₅₀ particle size of the crystals is between 0.3 µm and 7.0 µm as measured by scanning electron microscope (SEM), and wherein, the LNMO particulate material is boron modified.

It has further been found in the present invention that the inventive boron modified LNMO particulate material can beneficially be used as a cathode material in Li ion batteries.

In a **second aspect,** the present invention provides a process for the production of boron modified Lithium-Nickel-Manganese-Oxide (LNMO) particulate material, the process comprising the steps of:
(a) mixing a particulate LNMO material with a solution of boric acid in aqueous solvent,
(b) removing the aqueous solvent to obtain a dry mixture,
(c) calcinating the mixture in an oxygen containing atmosphere at a temperature between 700°C to 1100 °C to form boron modified LNMO particulate material.

In a third aspect, the present invention provides a boron modified LNMO material obtainable by the process according to the present invention.

### Detailed description of the invention

### Boron modified particulate Lithium-Nickel-Manganese-Oxide (LNMO) material

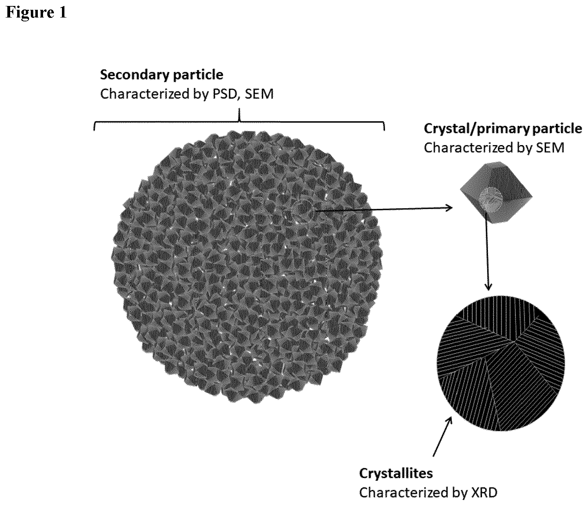

In a first aspect, the present invention provides a boron (B-) modified particulate Lithium-Nickel-Manganese-Oxide (LNMO) material that comprises secondary particles, wherein the secondary particles are composed of a multitude of crystals, and said crystals are composed of a multitude of crystallites, as schematically illustrated in Figure 1. Although the present invention is described herein below with respect to B modification of LNMO material, preferably Cobalt (Co) free LNMO material, the invention is applicable for any LNMXO cathode active spinel type material having similar crystal structure, wherein X includes one or more elements as defined herein below, and wherein X may partially replace Ni and/or Mn in the LNMO material.

The present invention achieves a B modification of an LNMO particulate material through high-temperature synthesis using an LNMO particulate material and the boric acid as B-source, and will also be referred to as "boron treatment". During this high-temperature synthesis, as described herein, B is anticipated to act as a modifying element, resulting in a boron phase on and/or within the grain boundaries of the LNMO particulate material. The boron may also present as bulk dopant within the material or surface dopant, or can form a separate phase along grain boundaries, surface coating or simply as a flux, or any combination thereof. The B modification of the present invention thus involves the incorporation of boron (B) into the grain boundaries, surface phase or in the surface and bulk of LNMO material. Boron can be present as B-based inorganic compounds, including B₂O₃, Li₂B₄O₇, LiBO₂, Li₂B₂O₅, LiBsOs or LiB₃O₅. B may also be present as Li-B-O glass like phase or as amorphous phase.

However, the treatment may also lead to boron being present within the grain boundaries of LNMO material, thereby providing a boron segregation within different grains. Therefore, even in case the modification may be referred to as a "surface modification", this does not exclude that the modification can also be present in the grain boundaries or inner part of the secondary particles. In consequence, it is within the scope of the present invention that the boron modification is not exclusively a surface modification but may also achieve a boron doping within the secondary particles, or is segregated at the grain boundaries. Typically, the boron modification is homogenously distributed on the surface of the particle.

The boron modified Lithium-Nickel-Manganese-Oxide (LNMO) material of the present invention is typically a cobalt-free lithium nickel manganese mixed oxide, which may contain additional elements, such as one or more elements selected from Mg, Ca, Zn, Fe, Al, Ti, Mo, W, Ta, Zr, B, Si, Cr and Cu. These element(s) can be present in addition to the elements Ni and Mn, or can partially replace Ni and/or Mn in the LNMO material. Thus, the LNMO material of the present invention can also be defined as LNMXO material, with X being one or more elements as defined above. In this embodiment, the LNMXO material can also be defined by the following formula:

(i) LiNi_{0.5-a}XₐMn_{1.5}O₄,

or

(ii) LiNi_{0.5}XₐMn_{1.5-a}O₄,

with a being from 0 to 0.1, preferably from 0.01 to 0.06.

Most preferably, the LNMO material is a high-voltage spinel LiNi_{0.5}Mn_{1.5}O₄ material. The LNMO material of the present invention is suitable for use as a cathode active material in secondary lithium-ion batteries. Scanning electron microscope (SEM) may be used to examine the morphology of the samples, and an energy-dispersive spectrometer may be used to examine the type, content, and distribution of elements in the LNMO material.

The particulate structure of the LNMO material is schematically shown in Figure 1. As shown therein, the LNMO particulate material comprises secondary particles, which are composed of a multitude of relatively smaller crystals. These crystals are composed of a multitude of crystallites.

The morphology of the secondary particles is typically spherical. Preferably, the secondary particle has a sphericity of between 1.0 and 0.70, and preferably is between 0.99 and 0.80, even more preferably between 0.98 and 0.90. The sphericity can be determined by methods well known in the art and is preferably determined from a cross-section of a secondary particle.

The D₅₀ particle size of a secondary particle is between 3.0 µm and 25 µm as measured by laser diffraction according to ISO 13320:2020, and preferably is between 5.0 and 20 µm, and further preferably is higher than 5.0 µm, 6.0 µm, 7.0 µm, 8.0 µm, 10 µm or 12 µm and further preferably is smaller than 18 µm, 16 µm or 14 µm.

The D₅₀ particle size of the crystals, which may also be referred to as "primary particles", is between 0.3 µm and 7.0 µm as measured by scanning electron microscopy (SEM), and preferably is between 0.5 and 5.0 µm, and further preferably is higher than 1.0 µm, 1.5 µm or 2.0 µm and further preferably is smaller than 6.0 µm, 5.0 µm, or 4.0 µm.

The crystallite size is between 90 nm to 600 nm, and preferably is between 100 and 500 nm and further preferably is between 200 and 450 nm, as measured by XRD Rietveld refinement (Rietveld, H. M. (1969). "A profile refinement method for nuclear and magnetic structures". Journal of Applied Crystallography. 2 (2): 65-71). XRD measurements are carried out using Bruker D8 X-ray diffraction analysis (Bruker, Germany). The crystallite shape typically is tetrahedral, octahedral and/or truncated octahedral shapes or mixed shapes. With the processes as described herein below, the crystallites of the boron-modified LNMO can be transformed into mixer of tetrahedral, octahedral and (truncated) octahedral shape, which enhances electrochemical performance of the material by providing more stable surfaces.

The space group of the Boron modified LNMO material is typically Fd-3m cubic phase, which is also termed as "disordered spinel" material in the art. Alternatively, the material may also have P4₃32 space group, which is termed in the art as "ordered spinel material". Typically, small amounts of LiₓNi₁₋ₓO can be detected in both materials, which is often found in disordered LNMO materials due to nickel or oxygen deficiency. This impurity phase can be eliminated by synthesizing non-stoichiometric spinel LNMO materials. Stoichiometric spinel is commonly defined in the art as LiNi_{0.5}Mn_{1.5}O₄ (with P4₃32 space groups in XRD analysis, in the art also commonly referred to as "ordered LNMO"). Depending on the starting material and process conditions, the particulate material of the present invention can also form a non-stoichiometric composition (with Fd-3m structure in XRD analysis, commonly referred to as "disordered LNMO"). A disordered material can be defined by the following formulae:

(I) LiNi_{0.5-x}Mn_{1.5+x}O₄

(Ni-deficient)

(II) LiNi_{0.5-x}Mn_{1.5+x}O_{4-d}

(Ni- and O-deficient)

(III) LiNi_{0.5}Mn_{1.5}O_{4-d}

(O-deficient),
wherein d and x, independently, are typically from 0 to 0.1, and preferably from 0.01 to 0.06.

The crystal structure of the LNMO material may be analyzed by XRD measurements and carried out using Bruker D8 X-ray diffraction analysis (Bruker, Germany).

It has surprisingly been found in the present invention that a boron treatment of an LNMO material as described herein significantly improves the stability of the material in half cells and further improves the rate capability and the capacity retention performance.

In the preferred embodiment, the boron modification is or comprises a B₂O₃ and/or Li₂B₄O₇ modification. Therefore, the modification comprises and preferably consists of B₂O₃ and/or Li₂B₄O₇ and/or glass like phase. Depending on the coating process, the modification may also consist of or comprise other lithium borate phases or mixtures thereof. With the processes as described herein below, the B can be dispersed uniformly on the surface of the LNMO material, leading to uniform particles with little variation in particle size and B content between the particles.

Because boron content (or boric acid amount) has tremendous effect on the morphology of the LNMO materials, the amount of boric acid used for the inventive LNMO material is limited and typically is between 0.01 to 4.0 wt. %, and preferably is between 0.05 wt.% to 3.0 wt.%, based on the weight of the LNMO material. Most preferably, the amount of boric acid used is between 0.05 and 2.5 wt.%, such as between 0.05 and 2.0 wt.%, based on the weight of the LNMO material. If the amount of boron exceeds the higher limit, the capacity of the material may decrease due to larger amount of the in-active boron in the material. Conversely, if the amount of boron in LNMO material is lower than the lower limit, the material's cycling performance and stability may not be enhanced and the desired effects may not be achieved.

Alternatively, the amount of boron present in the inventive LNMO material may be calculated as a molar ratio of B to the transition metals nickel and manganese. Thus, a molar ratio of B/(Ni+Mn) is preferably between 0.0003 : 0.04 and 0.0004 : 0.03, and further preferably is between 0.0006 : 0.025. Inductively coupled plasma optical emission spectrometry (ICP-OES) may be used to analyze the element content and calculate the molar ratio.

It has been surprisingly found in the present invention that the size and shape of the boron-modified particles can be beneficially controlled with the calcination temperature and the amount of boron present in the B-modified LNMO materials. Since boron increases the crystallite growth significantly, the particle size and particle morphology can be altered and controlled based on the amount of boron. Further, it is believed that the boron acts as a flux between LNMO particles, and thus stabilizes the integrity of the particles, thereby achieving an improved stability of the material.

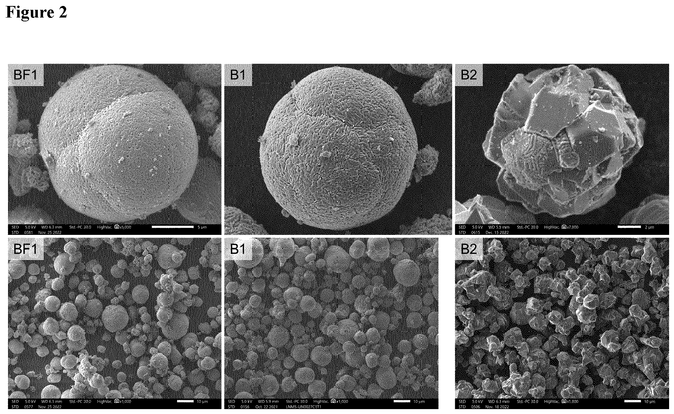

As evident from Fig. 2, a calcination higher temperature leads to significantly larger size of the crystals in B-LNMO material. Therefore, a heat treatment temperature of 700°C or less leads to primary crystals in the range of 90-140 nm, whereas, the temperature of around 900°C or higher leads to larger primary crystals, with a crystal size as described above. Thus, the properties of the boron-modified material can be beneficially engineered with the amount of boric acid in the boron-modified particles and the calcination temperature.

The large secondary particles of the inventive material result in high tap density and low specific surface area. The low specific surface area of the inventive boron modified LNMO can further improve cycling stability by reducing oxidative decomposition of the electrolyte and metal-ion dissolution from the cathode material, resulting in a more stable LNMO/electrolyte interface. Further, the particulate material has a high particle density with low porosity.

Therefore, a specific surface area of the LNMO particulate material is preferably between 0.1 and 0.5 m²/g as determined by Brunauer-Emmett-Teller (BET) surface area analysis.

A tap density of the LNMO particulate material according to the invention is typically higher than 2.0 g·cm⁻³ and can reach values close to the theoretical maximum for a packing of spherical particles of the same size of about 3.3 g·cm⁻³ and may be even higher depending on the particle size distribution. Thus, a tap density of the particulate material of the invention preferably is between 2.2 and 3.0, more preferably between 2.4 and 2.8 g·cm⁻³, and is most preferably about 2.6 g·cm⁻³ as determined according to ASTM B527-20.

The inventive boron-modified LNMO material can beneficially be used as a stable and high-capacity cathode material in Li ion batteries.

### Process for the production of boron modified LNMO particulate material

The inventive B-modified particulate LNMO material can be obtained by a process in which a particulate LNMO material (also referred to herein as precursor material or LNMO precursor) is mixed with a boron (B) source and subsequent calcination. The process can be carried out by a wet, i.e., solution-based process, by a semi-dry (incipient wetness) process in which only a small amount of solvent is used, and by a dry process.

In the wet process the B source is typically provided as a solution, which is mixed with a solution or slurry of the LNMO in a solvent. This wet process typically comprises the following steps (a) to (d):
(a1) mixing a particulate LNMO material with an aqueous solvent,
(a2) providing a solution of boric acid in an aqueous solvent,
(b) mixing the LNMO material with the solution of the boric acid,
(c) removing the aqueous solvent to obtain a dry mixture,
(d) calcinating the mixture in an oxygen containing atmosphere at a temperature between 700°C to 1100 °C to form boron surface modified LNMO particulate material.

The semi-dry process typically comprises the following steps (a) to (d):
(a1) providing a particulate LNMO material in powder form,
(a2) providing a solution of boric acid, in an aqueous solvent,
(b) adding the solution of the boric acid to the LNMO material while mixing,
(c) removing the aqueous solvent to obtain a dry mixture,
(d) calcinating the mixture in an oxygen containing atmosphere at a temperature between 700°C to 1100 °C to form boron surface modified LNMO particulate material.

The dry process typically comprises the following steps (a) to (d):
(a1) providing a particulate LNMO material in powder form,
(b) adding the dry boric acid to the LNMO material while mixing,
(d) calcinating the mixture in an oxygen containing atmosphere at a temperature between 700°C to 1100 °C to form boron surface modified LNMO particulate material.

Although the boron (B) source is typically boric acid, as described above, also other boron containing compounds may be used instead of or in addition to boric acid. Alternative boron containing compounds suitable for use as boron source in the processes of the invention include, but are not limited to one or more of boron trifluoride (BF₃), boron phosphate (BPO₄) or boranes (B₂H₆). Additionally, organic boron compounds, including e.g. triethylborate, diethylborate, ethylboronic acid, ethyl borate, tetraethyl borate, borate ester complexes, borate diesters, and boron ethoxide compounds, can also be used as a boron source.

The solvent used in step (a1) and/or (a2) is typically water, but may be any solvent suitable for dissolving the boron source, such as boric acid. Therefore, organic solvents, such as ethanol or isopropanol, or a mixture of water and organic solvent(s) may also be used provided that the reaction conditions are adjusted accordingly.

In the wet process, the concentration of boric acid solution, is typically from 5.0 g/l to 160 g/l, and preferably from 60 g/l to 160 g/l. Further, in the wet process, the amount of total solvent used per amount of LNMO material is typically from 3 to 12 1 (solvent)/kg(LNMO), and preferably from 4 to 10 1/kg, more preferably from 4 to 8 1/kg, with an optimal amount of about 5.01/kg.

Instead, in the semi-dry process, the concentration of boric acid solution is typically from 10.0 g/l to 300 g/l, and preferably from 15 g/l to 250 g/l. If the concentration of boric acid solution is higher than these upper limits, a uniform distribution of B on the LNMO surface might not be achieved. If the concentration of the boric acid solution is below these lower limits, the beneficial effects of improved rate stability and electrochemical performance might not be achieved. In addition, in the semi-dry process, the amount of total solvent used per amount of LNMO material is typically from 0.5 to 3.0 1(solvent)/kg(LNMO), and preferably from 0.6 to 2.0 l/kg, more preferably from 0.8 to 1.5 1/kg, with an optimal amount of about 1 l/kg.

The LNMO material used in step (a) can be synthesized at 700°C, or even at lower temperature of between 400-700°C.

Steps (a) and (b) are typically carried out at a temperature between 0°C to 90°C, such as at room temperature of 20-25°C, or at a temperature between 40 and 60°C.

In the semi-dry process, the solution of the boric acid is typically added dropwise to the LNMO powder while mixing to obtain a mud-like, i.e., semi-dry, mixture.

Step (b) typically comprises mixing the boric acid solution and the LNMO precursor. Mixing, e.g., under continuous stirring, may be performed for 1-12 hours, such as 2-6 hours, at the above-indicated temperature. In the semi-dry process, the stirring may be continued until the boric acid solution, is completely added.

In the wet process, the solvents are typically removed in step (c) by evaporation at atmospheric pressure or at reduced pressure, such as in a rotary evaporator, e.g., at 100 to 400 mbar. Removal of solvents is typically performed at room temperature, e.g. 20-25 °C, or at elevated temperature, such as between 30°C and 90°C, depending on the solvent(s) used.

Drying is conventionally performed at temperatures higher than the boiling temperature of the solvents used in the process. In case of water, drying is typically performed at temperatures between 100 and 150°C, e.g., between 100 and 120°C, until complete removal of the solvent is achieved.

In a further embodiment, the process may further comprises a pre-calcination step of treating the mixture obtained in step (b) at a temperature between 250°C and below 700°C for 2-8 h. The pre-calcination temperature is typically lower than the temperature used in the subsequent calcination step (d).

The oxygen containing atmosphere in step (d) is typically air, but may be any oxygen containing atmosphere including pure oxygen.

Calcination (step (d)) is typically carried out at a temperature between 700°C and 1100°C, preferably between 750°C and 1000°C, most preferably at about 900°C. During the heat-treatment, the LNMO will crystallize, and the boric acid may decompose, and may react with LNMO surface to achieve the B modification. It has been surprisingly found in the present invention that the size and shape of the boron-modified particles can be beneficially controlled with the calcination temperature. Moreover, during the heat treatment, the primary crystals grow in size and specific shapes, which results in superior electrochemical performance. As evident from Fig. 2, a higher calcination temperature leads to larger size of the crystals. Therefore, with a calcination temperature of between 800°C and 1000°C, the secondary particles will be composed of larger crystals, whereas a temperature of 700°C or lower will lead to secondary particles being composed of nano-sized (primary) crystals. Thus, the properties of the boron-modified material can be beneficially controlled with the calcination temperature.

High temperatures above 900 °C may lead to the formation of oxygen deficient phases. These oxygen deficient phases often contain undesired amounts of NiO or LiₓNi₁₋ₓO (with x typically being from 0 to 0.1) - which indicates partial decomposition of LNMO, which may lead to lower capacity of the resulting particulate material. Subsequent annealing steps at lower temperatures, such as from 600°C to 800°C, preferably from 650°C to 750°C, e.g., about 700°C can lead to a re-integration of the oxygen into the lattice and re-integration of the NiO separate phases to form LNMO with P4₃32 space group, resulting in higher capacities. Further, LNMO with Fd-3m space group may form for Ni-deficient phases, as defined above. Thus, performing an annealing step after the calcination step may be desired.

The calcination is typically performed between 2h and 24h, preferably between 6h and 20h, most preferably between 8h and 16h.

In an alternative embodiment, the process of the present invention involves a lithium (Li)-free precursor material, which is mixed with the boron source as described above. In this embodiment, the mixture of the Li-free precursor material and boron source is subsequently treated with a (Li) source.

This alternative process for the production of boron modified lithium-nickel-manganese-oxide (LNMO) particulate material thus typically comprises the steps of:
(a) mixing a particulate nickel manganese containing precursor material with a solution of boric acid in water or an aqueous solvent,
(b) removing the water or aqueous solvent to obtain a dry mixture,
(c) adding a lithium source (e.g., lithium hydroxide and/or lithium carbonate) to the dry mixture obtained in step (b), and
(d) calcinating the mixture in an oxygen containing atmosphere at a temperature between 700°C to 1100 °C to form boron surface modified LNMO particulate material.

In this embodiment, a Li-free precursor material may be used. The (typically Li-free) nickel manganese precursor material may comprise a transition metal, i.e., nickel and manganese containing carbonate, oxide or hydroxide, such as a nickel-manganese carbonate, nickel-manganese oxide or nickel-manganese hydroxide, which may contain additional elements, as described above. The precursor material can be obtained by processes basically as described herein below, such as spray drying, hydrothermal or co-precipitation processes. The precursor material is mixed with the boron source as described above. The resulting mixture is subsequently mixed with a Li source, such as lithium carbonate or hydroxide and calcinated as described above. Thus, with respect to steps (c) and (d), the above description for the inventive process for obtaining the B-modified particulate material using a Li-containing LNMO precursor material applies in the same way to this alternative embodiment using a (typically Li-free) precursor material, wherein the Li source is only added in a subsequent step after mixing the precursor material with the B source. Moreover, an additional heat treatment step may be used after step (b), which is typically performed at a temperature in the range of 300-700°C for 4-12 h.

### Preparation of LNMO precursor material

The LNMO precursor material used in the above-described processes is not particularly limited and may be obtained by processes described in the art, such as by spray drying, hydrothermal or co-precipitation processes. Co-precipitation is the viable commercial process with benefits such as scalability, allowing for control of particle size and particle morphology, and low cost, and thus is preferably used for preparing the LNMO precursor material.

In addition to these methods, combined processes are described in which a precursor, e.g., a transition metal carbonate, oxide or hydroxide, is produced by co-precipitation, which is then reacted with stoichiometric amounts of a lithium compound to give the end product. Co-precipitation can be performed with or without an additional low temperature heating step at a temperature typically between 300 and 600 °C. Such a low temperature heating step may be desired to form oxides. In lithium-ion battery materials, co-precipitation is currently widely used to produce transition metal hydroxide precursors. However, co-precipitation processes using carbonate precursors can be used alternatively.

For example, the LNMO precursor material can be obtained by a batch-wise or continuous co-precipitation process.

A continuous co-precipitation process is described, for example, in DE 10 2023 116 756.1. In a first process step, an aqueous solution of a transition metal salts may be continuously mixed with an aqueous solution of a carbonate in the presence of an aqueous solution of an organic additive in a continuous stirred tank reactor. The continuous mixing results in the continuous precipitation of the transition metal carbonate in the reactor. The precipitated transition metal carbonate is therefore present as a solid suspension in the reactor and can be continuously removed.

In a preferred embodiment, the co-precipitation process comprises the steps of:
(i) providing a solution comprising ammonia, manganese salt and nickel salt to obtain a Nickel-Manganese-Hydroxide precursor.
(ii) mixing the Nickel-Manganese-Hydroxide precursor with lithium hydroxide, and
(iii) calcination in an oxygen containing atmosphere at temperature between 400°C to 900°C for 6-20 h.

The manganese salt and/or nickel salt are not particularly limited, and can be any salt with sufficient aqueous solubility to be present as a solution under the reaction conditions applied during the co-precipitation process. Typically, at least one of the manganese salt and the nickel salt is a nitrate or sulfate salt, with the nitrate salt being particularly preferred.

Nickel and Manganese salts are typically used in a ratio to achieve a stoichiometry of Mn/Ni of between 4:1 and 2:1, such as about 3:1. Alternatively, Nickel and Manganese salts are typically used in a ratio to achieve a stoichiometry of Ni_{0.5-x}Mn_{0.5+x}, wherein x is between 0 and 0.6.

A typical process involves impregnation of LNMO precursor material, e.g., hydroxide precursor, which may be obtained from e.g. Ni_{0.25}Mn_{0.75}(OH)₂ with LiOH, such as LiOH·H₂O, and heating at temperatures between 400°C to 700°C, e.g. at about 450°C, for 2-10h, such as about 6 h. In a preferred embodiment, boric acid, is provided as a solution, and is added to the LNMO material. The material mixture may be heated to 700 - 1100°C, most preferably at about 850°C to 900°C for 6 h-16 h, such as about 12 h.

The LNMO precursor material obtained by the above-described processes is preferably a particulate material comprising spherical particles having a D₅₀ particle size between 4 µm and 30 µm, preferably between 7 µm and 20 µm.

Thus, in a further aspect, the present invention provides a boron modified, such as a B₂O₃ or Li₂B₄O₇ modified LNMO material obtainable by the processes described herein, preferably obtainable by a co-precipitation process as described herein.

### Description of Figures

**Figure 1****:** Schematic presentation of a boron modified LNMO secondary particle being composed of crystals and crystallites.
**Figure 2****:** SEM images of boron-free (BF1) and boron modified LNMO particles synthesized at 300°C (B1) and 900°C (B2) heat treatment temperatures.
**Figure 3****:** SEM images for the boron free (BF2 and BF3) and boron modified (B3-B10) LNMO materials synthesized at 850°C and 900°C with different boric acid amounts.
**Figure 4****:** SEM images for the boron free (BF2, BF3 and BF4) and boron modified (0.125 wt.%) LNMO (B11-B14) materials synthesized at different heat treatment temperatures (850-1000°C).
**Figure 5****:** XRD patterns for the boron free (BF1) and boron modified (B1 and B2) LNMO materials.
**Figure 6****:** Rate capability and cycling performance for the boron free (BF1) and boron modified (B1 and B2) LNMO materials.
**Figure 7****:** Charge-discharge curves comparison for the boron free (BF 1) and boron modified (B1 and B2) LNMO materials.

### Examples

In the following, the present invention is further illustrated and described by non-limiting experimental examples.

The table below shows the acronyms used for the B-free LNMO (BF-LNMO) material, and B-modified material (B-LNMO) synthesized, as described in the following Examples. The numbers next to the acronyms refer to different samples synthesized under varying synthesis conditions (temperature or degree of B-modifications).

| **Process/Material** | **Acronyms** | **Samples** |
|---|---|---|
| B-free LNMO* (BF-LNMO) | BF | BF1-BF4 |
| B-modified LNMO (B-LNMO) | B | B1-B14 |

| | | |
|---|---|---|
| *Comparative material for reference purposes | | |

### Example 1 - Precursor synthesis

A high density LiNi_{0.5}Mn_{1.5}O₄ (LNMO) was synthesized using two-step process, (1) precursor synthesis, (2) lithiating the precursor. Initially, the precursor Ni_{0.25}Mn_{0.75}(OH)₂ was synthesized using a co-precipitation technique within a continuous stirred tank reactor (CSTR). This involved the utilization of aqueous solutions containing ammonia, nickel, and manganese nitrates, maintaining a Mn/Ni ratio of 3/1. The co-precipitation process yielded dense spherical particles of micron-scale dimensions. Later, the synthesized precursors were mixed with lithium hydroxide and underwent a calcination at 450-700°C for a duration of 6-20 hours for different sample materials within an ambient air environment, which resulted in LNMO. Later, this material was used to synthesize the B-modified LNMO materials.

### Example 2 - Boron treatment

### 2.1 Wet coating approach

Firstly, 70 ml of distilled water (DI) was transferred to a beaker (solution 1) and heated to 70°C with continuous stirring. Later, 10 gram of LNMO was added to solution 1. In the meantime, 20 ml of DI was added to another beaker (solution 2) at 60°C and stirred for 15 minutes. Later, boric acid (H₃BO₃), corresponding to the targeted amounts of B in B-LNMO, was added to solution 2 and stirred for further 30 minutes. Finally, the boric acid solution (solution 2) was added to solution 1 dropwise. The temperature was increased to 70°C and the LNMO/H₃BO₃ was left for stirring for around 6 hours. Later, the solution was transferred to rotary evaporator (Büchi) for the removal of DI water. The temperature of the rotary evaporator bath was set to be 70°C and 220 mbar pressure was applied for the DI water removal. Later, the LNMO/H₃BO₃ was transferred to the drying oven set at 120°C for overnight. Finally, the LNMO/H₃BO₃ was heat treated at different temperatures (800, 850, 900, 1000°C) to synthesize B-LNMO materials. For boron-free LNMO (BF-LNMO) materials, LNMO was simply heat treated at 800, 850, 900, 1000°C.

### 2.2 Semi-dry (incipient wetness) approach

Initially a solution of boric acid in DI water was prepared by adding boric acid to the DI water with continuous stirring at 70°C for 15 minutes, yielding a boric acid solution. The boric acid amount was adjusted to meet the desired boron (B) content for B-modified LNMO materials. Moreover, the amount of total solvent used per amount of LNMO material was 1 l/kg. Concurrently, 5 grams of LNMO material were placed in a mortar and pestle. Subsequently, the boric acid solution was added dropwise to the dry LNMO material while stirring continuously, ensuring the even distribution of H₃BO₃ on the LNMO particles. This process resulted in a clay-like material. The LNMO/H₃BO₃ mixture was then dried in an oven at 120°C overnight, removing the solvent. Finally, the LNMO/H₃BO₃ underwent heat treatment at various temperatures (800, 850, 900, and 1000°C) to synthesize B-modified LNMO materials, enabling the desired modifications. For boron-free LNMO (BF-LNMO) materials, LNMO was simply heat treated at 800, 850, 900, 1000°C.

### 2.3 Dry coating approach

In this process, the LNMO material was mixed with boric acid manually. The amounts of boric acid was adjusted to get the desired boron (B) content for B-modified LNMO materials. Later, LNMO/H₃BO₃ underwent heat treatment at various temperatures (800, 850, 900, and 1000°C) to synthesize B-modified LNMO materials, enabling the desired modifications.

### Example 3 - SEM imaging of B-modified LNMO material

**Figure 2** compares the SEM images of the boron-free LNMO (BF-LNMO) and boron-modified LNMO (B-LNMO) materials synthesized using the wet coating approach as described in Example 2.1 at different synthesis temperatures. The BF1 and B1 materials show very similar morphology, and no differences can be found even with the boric acid treatment. Here the BF1 material was synthesized at 700°C, and later boric acid treatment was applied on it and calcined at 300-400°C for 6 hours to form B1 material. Moreover, the crystallite size and the lattice parameters were also quite similar, as listed in table 2. On the other hand, increasing the calcination temperature to 900°C for the B-LNMO materials (B2), has significant influence on the morphology of the material. The primary crystal grown significantly in size and are in the range of 1.5-7 µm. The larger primary crystal also results in reduction in the surface area of the material.

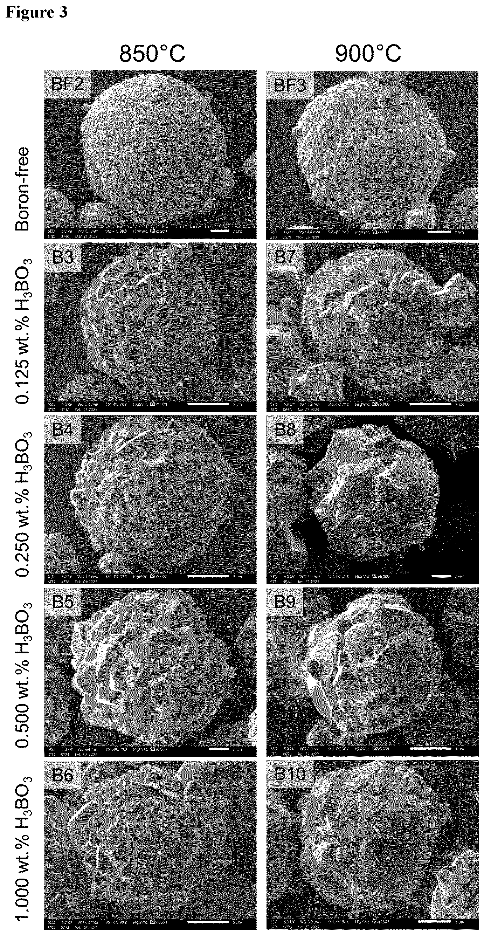

**Figure 3** compares the SEM images of the BF-LNMO and B-LNMO materials, synthesized using different amounts of boric acid, and synthesized at 850°C and 900°C. It can be seen that the BF-LNMO materials have much small primary crystals, whereas with the additional of small amount of boric acid (even 0.125 wt. %) has significant influence on the primary crystal size and shape. Moreover, with the addition of boric acid, the primary crystal appears to be the mixer of tetrahedral, octahedral and truncated octahedral in shape. Increasing the synthesis temperature and the amount of boric acid, as can be seen for the B8, B9 and B10 materials, the shape of primary crystal slightly changes and transform to randomly shape primary crystal. Therefore, it can be seen that lower temperature and lower amounts of boric acid tend to form mixer of tetrahedral, octahedral and truncated octahedral shape primary particles, whereas higher synthesis temperature and boric acid amounts result in randomly shaped primary crystals.

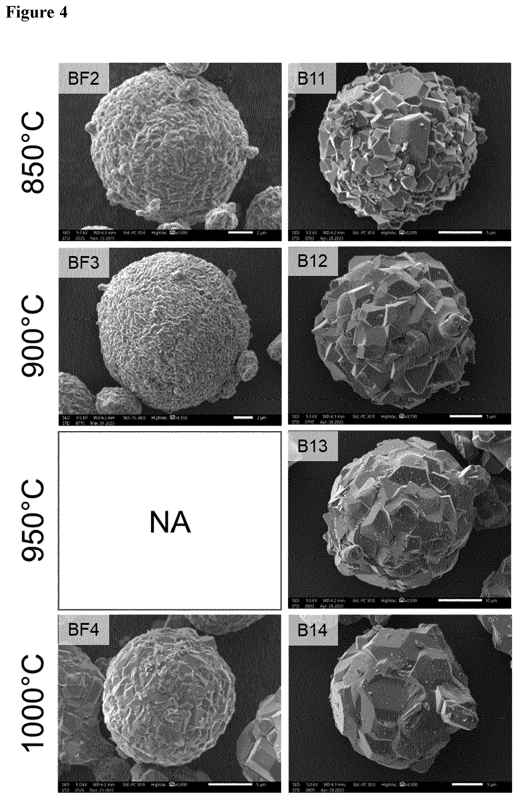

As it was found that the lower temperatures and lower amounts of boric acid result in the tetrahedral, octahedral and truncated octahedral shaped primary particles. Therefore, BF-LNMO and B-LNMO (0.125 wt.% H₃BO₃) were synthesized at different heat treatment temperatures, and the SEM images are compared in **Figure 4****.** It can be seen that the BF-LNMO and B-LNMO materials display totally different morphology, especially related to the morphology of the primary crystal. Firstly, it can be clearly seen that even the small amount of boric acid (0.125 wt. %) has significant influence on the material morphology. With increasing the synthesis temperatures, the BF-LNMO material show larger primary particles. On the other hand, the B-LNMO materials show the mixer of tetrahedral, octahedral and truncated octahedral shape primary crystal. Lower synthesis temperature of around 850°C result in smaller primary crystal. Whereas, increasing the synthesis temperature to 900°C (BM12) and beyond, tremendously increase the size of the primary crystals. The B14 material, synthesized at 1000°C show much larger primary crystals, however, the secondary particles still retain larger spherical shaped particles.

In addition, the primary particles of B-LNMO synthesized at temperature greater than 700°C (B2) transformed into mixes of tetrahedral, octahedral and (truncated) octahedral shape (**Figures 3****,** **4**), which is known to enhance electrochemical performance by providing more stable surfaces.

Moreover, with controlling the synthesis conditions (calcination temperature and B concentration), the size of the primary crystals can be controlled (**Figure 3****,** **4**). Therefore, the physical and electrochemical properties of B-LNMO can be controlled over wide range.

The larger secondary particles resulted in high tap density and low specific surface area (0.2 m² g⁻¹ for B-LNMO). The lower specific surface area of B-LNMO can further improve cycling stability by reducing oxidative decomposition of the electrolyte and metal-ion dissolution from the cathode material, resulting in a more stable LNMO/electrolyte interface.

### Example 4 - XRD measurement of B modified LNMO material

LNMO materials prepared in Examples 2.1, 2.2 and 2.3 were analysed by XRD measurements.

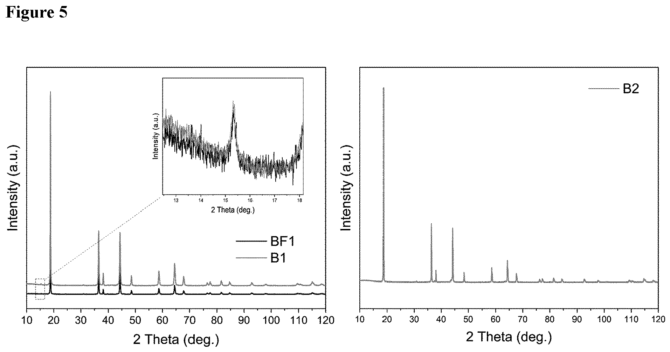

**Figure 5** illustrates the XRD patterns for both BF-LNMO (BF1) and B-LNMO materials (B1-B2) prepared in Example 2.1, which can be indexed to the P4₃32 or Fd3m cubic phases depending on the synthesis conditions. The BF1 and B1 synthesized at 700°C and B1 was heat treated at 300-400°C after boron treatment, can be indexed to P4₃32 as the superlattice peak can be clearly seen. On the other hand, the B2, which was synthesized at 900°C can be indexed to the Fd3m cubic phase, since no supper-lattice peaks was observed. Moreover, small amounts of NiO or LiₓNi₁₋ₓO was detected in B2 material synthesized at 900°C, which is typically found in LNMO materials synthesized at temperature higher than 700°C due to nickel or oxygen deficiency.

**Table 1** presents the ICP results for the BF-LNMO (BF 1) and B-LNMO materials (B 1), which confirms almost stoichiometric composition (Mn/Ni ≈ 3/1). The BF-LNMO and B-LNMO material display a spherical morphology with micron-sized secondary particles, with D₅₀ around 14 µm and 17.5 µm respectively.

**Table 1: ICP analysis results of B-free & B-modified LNMO (B-LNMO).**

| **Sample** | **Li** | **Ni** | **Mn** | **B** |
|---|---|---|---|---|
| BF1 | 1.00 | 0.500 | 1.500 | - |
| B1 | 1.00 | 0.499 | 1.501 | 0.0058 |

The crystallite size for BF-LNMO (BF1) was approximately 116.3 nm, while for B-LNMO (B1) calcined at 300°C it was around 117.4 nm. However, at higher synthesis temperatures, the crystallite sizes increased significantly (which could be controlled). Moreover, the lattice parameter and cell volume slightly increased for B-LNMO material (B2) synthesized at 900°C. Refinement parameters and particle size are listed in **Table 2.**

**Table 2: Rietveld refinement parameters and particle size distribution of BF & B-LNMO.**

| **Sample** | **Lattice Constant a(Å)** | **Cell volume (Å³)** | **Crystallite size (nm)** | **Strain** |
|---|---|---|---|---|
| BF1 | 8.16863 | 545.066 | 116.2 | 0.4534 |
| BF2 | 8.17296 | 545.932 | 199.1 | 0.2605 |
| BF3 | 8.17426 | 546.192 | 244 | 0.2219 |
| BF4 | 8.17876 | 547.094 | 344 | 0.1840 |
| BM1 | 8.1684 | 545.020 | 117.4 | 0.4532 |
| BM2 | 8.18164 | 547.673 | 308 | 0.1445 |
| BM11 | 8.17697 | 546.736 | 402 | 0.1063 |
| BM12 | 8.18172 | 547.690 | 354 | 0.1424 |
| BM13 | 8.18288 | 547.922 | 333 | 0.1480 |
| BM14 | 8.18355 | 548.057 | 306 | 0.1623 |

### Example 5 - Electrochemical results

All electrochemical measurements were conducted using a conventional electrolyte (1M LiPF₆ EC:DMC 1:1 wt.%) without any stabilising additives. Active material loadings were between 9-10 mg cm⁻². All measurements were performed in coin-cell (CR2023) configuration. Lithium metal (450µm) was used as a counter electrode, and two glass-fibre sheets were used as a separator. For all cells, 150 µl of electrolyte was used, and all half-cell measurements were performed at 25°C.

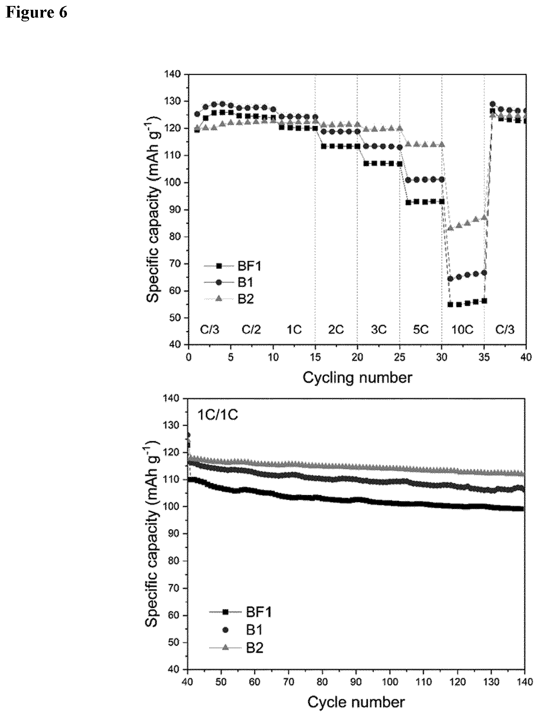

**Figure 6** illustrates a comparison of the rate capability performance for BF-LNMO (BF1) and B-LNMO (B1 and B2). Clearly, BF1 and B1 show slightly higher discharge capacities at slow C-rates when compared to B2. The main reason for the lower initial discharge capacities for the B2 material is the presence of rock-salt LiₓNi₁₋ₓO impurity phase which is electrochemical inactive. Thus, the presence of electrochemical inactive phase results in lower initial discharge capacities. Moreover, the impurity phases can be reduced if additional annealing treatments at around 700°C are applied to these materials, which would result in higher initial discharge capacities. However, it can be seen the B-LNMO materials, result in much better rate capability when compared to BF-LNMO. Furthermore, the B-LNMO synthesized at 900°C (B2) display the best rate capability, even with significant larger size of primary crystals. This trend is similar when the material were cycled at 1C. The B2 show the highest discharge capacity and best stability. The BF-LNMO (BF1) show lower discharge capacities and less stability. Thus, it can be concluded that the B-modified materials have fast kinetics, and are much stable when compared to the B-free LNMO materials.

Moreover, the electrochemical performance of the B-LNMO materials prepared in Example 2.1 were analysed by measuring the rate capability performance, cycling performance, and galvanostatic charge/discharge curves in half-cell (LNMO vs. Li/Li⁺).

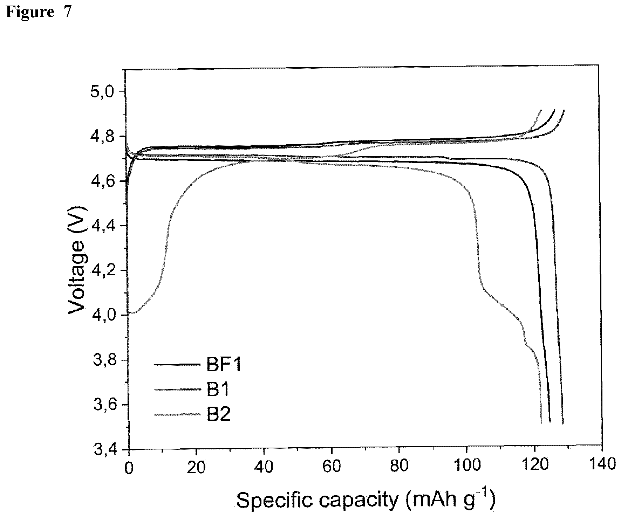

**Figure 7** compares the charge and discharge curves for the BF1, B1 and B2 materials. As seen from the XRD patterns, the materials BF1 and B1 can be indexed to P4₃32, which are generally referred to ordered LNMO in literature. Such materials have a single high voltage plateaus at around 4.7 V (vs. Li/Li⁺). On the other hand, the B2, which belong to Fd3m space group, generally referred to as disordered LNMO show additional low voltage plateau at around 4.0 V Therefore, the materials BF1 and B1 show single high voltage plateau at around 4.7 V Furthermore, it can be seen the B1 show higher initial discharge capacity when compared to BF1. The B-modification resulted in higher discharge capacity. The B2 material also display 4.0 V plateau which represents the Mn³⁺/Mn⁴⁺ redox couple, which results from the loss of oxygen from the LNMO structure during high temperature synthesis. The B2 material display slightly lower initial discharge capacity when compared to both BF1 and B 1. The reason for lower capacity is the presence of electrochemically inactive rock-salt LiₓNi₁₋ₓO impurity phase in B2 material.

In summary, it could be experimentally shown that by B-modification of LMNO material, the stability of the material in half cells could be significantly improved. Moreover, the B-LNMO material (B2) synthesized at 900°C displayed even better rate capability and cycling stability when compared to the B-LNMO (B1) synthesized at 700°C. Thus, the new B modified LNMO material according to the invention shows significantly improved stability due to boron treatment, specific primary particle shape and design. Compared to BF-LNMO, B-LNMO demonstrates superior rate capability and long-term cycling.

## Claims

1. Lithium-Nickel-Manganese-Oxide (LNMO) particulate material, wherein the LNMO particulate material comprises secondary particles,
wherein the secondary particles are composed of a multitude of crystals, and said crystals are composed of a multitude of crystallites,
wherein a D₅₀ particle size of the secondary particles is between 3.0 µm and 25 µm, as measured by laser diffraction according to ISO 13320:2020, and
wherein a D₅₀ particle size of the crystals is between 0.3 µm and 7.0 µm as measured by scanning electron microscope (SEM), and
wherein, the LNMO particulate material is boron modified.

2. LNMO particulate material according to claim 1, wherein the D₅₀ particle size of the secondary particle is between 5.0 µm and 20 µm as measured by laser diffraction according to ISO 13320:2020.

3. LNMO particulate material according to claim 1 or 2, wherein a D₅₀ particle size of the crystals is between 1.0 µm and 5.0 µm as measured by SEM.

4. LNMO particulate material according to any one of the preceding claims, wherein a crystallite size is between 90 nm to 600 nm as measured by XRD Rietveld refinement.

5. LNMO particulate material according to any one of the preceding claims, wherein the boron modification comprises B₂O₃ or Li₂B₄O₇.

6. LNMO particulate material according to any one of the preceding claims, wherein a molar ratio of B/(Ni+Mn) is between 0.0003-0.04.

7. Use of the LNMO particulate material according to any one of the preceding claims as a cathode material in Li ion batteries.

8. Process for the production of boron modified Lithium-Nickel-Manganese-Oxide (LNMO) particulate material, the process comprising the steps of:
(a) mixing a particulate LNMO material with a solution of boric acid in an aqueous solvent,
(b) removing the aqueous solvent to obtain a dry mixture,
(c) calcinating the mixture in an oxygen containing atmosphere at a temperature between 700°C to 1100 °C to form boron modified LNMO particulate material.

9. Process according to claim 8, wherein the process further comprises a pre-calcination step of treating the mixture of step (b) at a temperature between 300°C and below 700°C for 2-8 h.

10. Process according to claim 8 or 9, wherein calcination step (c) is performed at a temperature between 800°C and 1000°C and is performed between 6h and 20h.

11. Process according to any one of claims 8-10, wherein mixing in step (a) is carried out at a temperature between 25°C and 90°C.

12. Boron modified LNMO material obtainable by the process according to any one of claims 8-11.
